# EUROPEAN PATENT APPLICATION

(11) **EP 1 795 805 A2**
(43) Date of publication of application: **13.06.2007**
(21) Application number: 06256201.2
(22) Date of filing: 05.12.2006
(51) Int. Cl.: F23K 5/08, F23R 3/28, F23C 99/00

(54) **Rich catalytic clean burn for liquid fuel with fuel stabilization unit**

(30) Priority: 08.12.2005 US 297177
(71) Applicant: UNITED TECHNOLOGIES CORPORATION, Hartford, CT 06101 (US)
(72) Inventor: Chen, Alexander G., Ellington, CT 06029 (US)
(74) Representative: Leckey, David Herbert

(57) **Abstract**

A fuel stabilization system (26) comprises a deoxygenator (20) that removes dissolved oxygen from a liquid fuel to allow vaporization of the liquid fuel without the undesirable production of insoluble materials and byproducts. The vaporized fuel is then mixed with oxidizers and reformed in a catalytic reactor (24). The resulting vaporized fuel provides for moderately low temperature sustained combustion with reduced emission of undesirable byproducts.

## Description

### BACKGROUND OF THE INVENTION

This invention generally relates to a fuel delivery system for an energy conversion device. More particularly, this invention relates to a fuel delivery system including a fuel deoxygenator for removing dissolved oxygen providing for vaporizing fuel to improve combustion.

A gas turbine engine is an energy conversion device commonly used in aircraft and power generation applications. A gas turbine engine typically includes a compressor, a combustor and a turbine. Oxidizer entering the compressor is compressed and directed toward a combustor. Fuel is combined with the highpressure oxidizer and ignited. Combustion gases produced in the combustor drive the turbine.

Turbine engines that bum liquid fuel produce emissions that can include oxides of nitrogen (NOx), carbon monoxide (CO), unburned hydrocarbons (UHC) and other particulates. It is desirable to reduce the level of these elements emitted from the engine. Using fuel in a gas form such as natural gas that is premixed to form a lean mixture substantially reduces emission of undesirable elements. Vaporization and premixing of a liquid fuel also provide for the reduction of undesirable emissions.

However, heating to vaporize a liquid hydrocarbon fuel can result in the production of undesirable insoluble materials commonly known as "coking". Coking can cause formation of coke deposits within the fuel system, clogging passages and degrading overall engine performance. The formation of coke deposits is dependent on the amount of dissolved oxygen present within the fuel due to prior exposure to oxidizer. Reducing the amount of oxygen dissolved within the fuel decreases the rate of coke deposition and increases the maximum allowable temperature in which the fuel can be heated without forming coke deposits.

Further, adding additional compounds to a vaporized fuel can provide a lean mixture for burning in the combustor that provides for reduced emissions. The addition of an oxidizer within a catalytic reactor provides a reformed fuel that improves the combustion process. It is therefore desirable to develop a process and design a system for improving combustion that provides for the vaporization of a liquid fuel without generating undesirable coke deposits.

### SUMMARY OF THE INVENTION

An example low emission rich catalytic combustion system according to this invention removes dissolved oxygen from a liquid fuel to allow vaporization without the undesirable production of insoluble materials and byproducts.

The example fuel transforming system conditions fuel to optimize the combustion process and includes a fuel deoxygenator, a heat transfer device and a catalytic reactor. The fuel deoxygenator removes dissolved oxygen from liquid hydrocarbon fuel, allowing the fuel to be vaporized without the detrimental effects and production of unmanageable amounts of insoluble materials. The vaporized fuel is then mixed with oxidizers and reformed in the catalytic reactor. The resulting reformed fuel mixed with more oxidizer provides for low temperature sustained combustion with reduced emission of undesirable byproducts. The vaporization of the liquid fuel improves the combustion process by improving mixing of oxidizer and fuel, that in turn provides improved flame stabilization and a more complete and efficient bum.

Accordingly, the fuel transforming system and method of this invention improves combustion by providing for the vaporization of a liquid fuel without generating undesirable by-products.

These and other features of the present invention can be best understood from the following specification and drawings, the following of which is a brief description.

### BRIEF DESCRIPTION OF THE DRAWINGS

Figure 1 is a schematic illustration of an example engine system with a fuel stabilization unit according to this invention.
Figure 2 is another schematic illustration of an example engine system with a fuel stabilization unit according to this invention.
Figure 3 is a block diagram of a method of preparing fuel for combustion according to this invention.
Figure 4 is a schematic cross-section of an example permeable membrane according to this invention.

### DETAILED DESCRIPTION OF THE PREFERRED EMBODIMENT

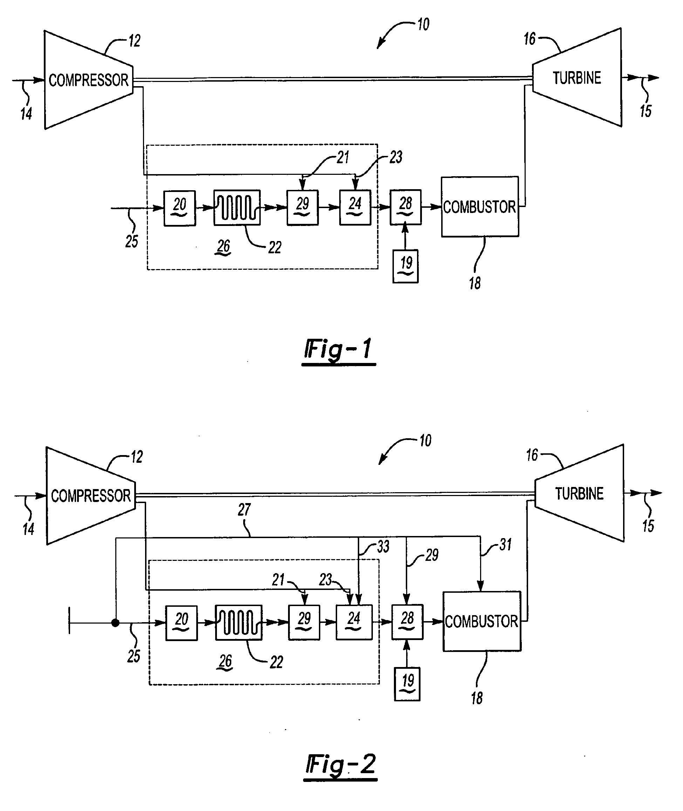

Referring to Figure 1 an example gas turbine engine 10 according to this invention is schematically shown and includes a fuel transforming system 26 that conditions fuel to optimize the combustion process. As appreciated, although a gas turbine engine is discussed as the illustrated example, other combustion processes and devices such as reciprocating engines, steam engines and other know energy conversion devices will also benefit from this invention.

The gas turbine engine 10 includes a compressor 12 that compresses intake air 14, a combustor 18 for igniting a fuel oxidizer mixture and a turbine 16 that turns in response to a flow of exhaust gases 15 produced in the combustor 18.

The gas turbine engine 10 of this invention includes a fuel transforming system 26 that includes a fuel deoxygenator 20, a heat transfer device 22 and a catalytic reactor 24. Hydrocarbon fuel typically includes dissolved oxygen due to exposure with oxidizer during transport and storage. Dissolved oxygen within the fuel combines with other compounds within the fuel at elevated temperatures. The resulting interactions produce undesirable insoluble materials commonly referred to as "coke". The insoluble materials that build up due to these interactions can build up on the interior walls of the fuel transforming system 26 and combustor 18 causing an undesirable degradation in performance.

Removal of dissolved oxygen from the hydrocarbon fuel increases the temperature at which formation of insoluble materials begins appreciably, along with reducing the amount of insoluble material produced. The deoxygenator 20 removes dissolved oxygen from the fuel without significantly interfering with fuel.

In many combustion processes the fuel oxidizer mixture is a critical component to engine efficiency and emissions. A mixture including a greater percentage of fuel than that in stoichiometric mixture is known as a rich mixture and can be ignited and sustained at relatively lower combustion temperatures compared to stoichiometric combustion temperature. A mixture with a greater percentage of oxidizer than that in stoichiometric mixture is known as a lean mixture and operates at lower temperatures compared to stoichiometric combustion temperature. Operating the combustor at lower temperatures is preferable in some applications to produce lower level of oxides of nitrogen and to avoid the heat management devices and structures required to sustain high temperature combustion. However, combustion with too low temperature produces emissions with undesirable levels of byproducts such as carbon monoxides and unburned hydrocarbons and various other undesirable substances. The lean mixture operating at moderately low temperatures does not produce the high levels of NOx, CO and UHC. However, such lean mixtures are currently practical only with fuel in a gas state and are not practical utilizing common liquid hydrocarbon fuels.

The fuel transforming system 26 of this invention removes dissolved oxygen from a liquid hydrocarbon fuel supplied from a fuel source 25, allowing the fuel to be vaporized without the appreciable detrimental effects and production of unmanageable amounts of insoluble materials. The vaporized fuel is then mixed with oxidizers 21 in premixer 29 to form a rich mixture and reformed in the catalytic reactor 24 which may need cooling as is schematically indicated by arrow 23 to ensure durability. The resulting vaporized fuel provides for low temperature sustained reaction that reduces the production of NOx in the catalytic reactor 24. The vaporization of the liquid fuel improves the combustion process by improving mixing of oxidizer and fuel that in turn improves reaction in the catalytic reactor 24. The transformed fuel processed in fuel transforming system 26 is then mixed with proper amount of oxidizer 19 in a post-mixer 28, and becomes a lean mixture and reacted in combustor stably with minimal NOx, CO and UHC. Oxidizer 19 can be partly or fully supplied by part or all the cooling flow 23.

Referring to Figure 2, another example of a gas turbine engine 10 and fuel transformation system 26 includes a quantity of fuel that flows through a bypass line 27 that bypasses the fuel transformation system 26 and is directly injected into the post-mixer 28 or the combustor 18. As is appreciated, a substantial improvement in fuel conditioning is provided with only a portion of fuel being flowed through the fuel transformation system. Each component of the fuel transformation system 26 can induce a pressure drop or affect other fuel flow parameters. Balancing the amount of fuel that flows through the fuel transformation system 26 and the amount of fuel that is bypassed through the bypass 27 provides a means for tailoring fuel flow characteristics to improve combustion. For example, adding liquid fuel in the combustor 18 can improve the flame stability. Further, the bypass 27 is shown supplying fuel through line 29 to the post-mixer 28 and through line 31 directly to the combustor. Either or both lines maybe utilized to provide the desired fuel flow properties to achieve the desired combustion performance. Additionally, liquid fuel from the fuel source 25 may be directly injected through line 33 into the catalytic reactor 24. Accordingly, a portion of liquid fuel can be routed around anyone or all of the components 20, 22, 29 and 24 in the system 26 to provide desired combustion performance and conditioning of fuel entering the combustor 18.

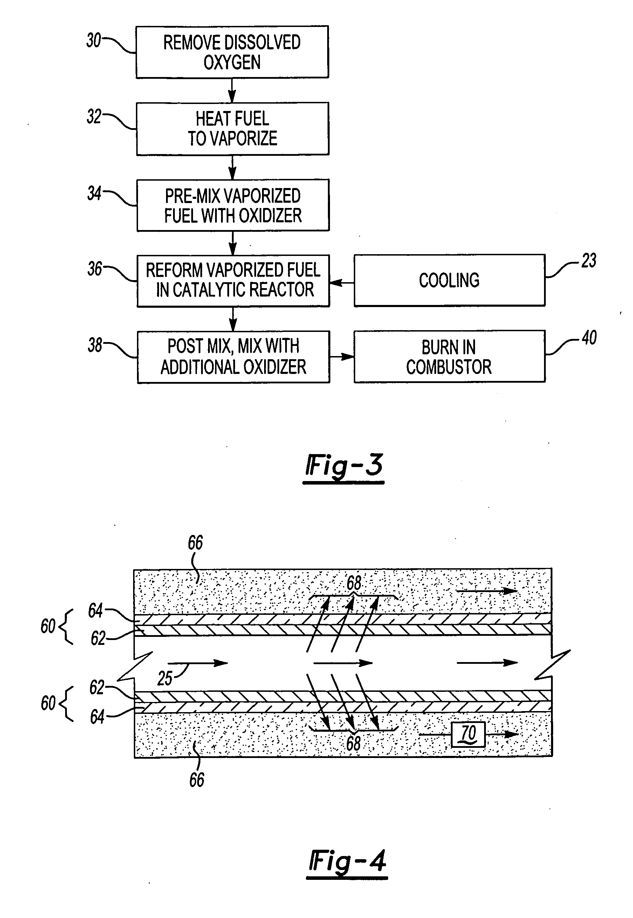

Referring to Figure 3, the fuel transforming system 26 operates by first removing a significant amount of dissolved oxygen from within a stream of liquid hydrocarbon fuel 25 as is indicated at 30. The dissolved oxygen is removed within the deoxygenator 20. The amount of dissolved oxygen removed from the fuel is such that vaporization of the fuel will not cause appreciable undesirable production of unmanageable amounts of coke or other insoluble products. In some applications this may require the removal of oxygen such that dissolved oxygen comprises only 0.1 parts per million. Other applications may operate satisfactorily at higher oxygen concentrations.

Referring to Figure 4, the deoxygenator 20 includes an oxygen permeable membrane 60 over which the liquid fuel flows. An oxygen partial pressure differential across the permeable membrane 60 draws out dissolved oxygen 68 from the liquid fuel. Oxygen migrates through the permeable membrane 60 and is exhausted from the deoxygenator. The permeable membrane 60 is comprised of a permeable layer 62 applied over a porous backing 64.

The permeable membrane 60 is supported along a porous substrate 66. A vacuum source 70 creates an oxygen partial pressure differential across the permeable membrane 60 such that dissolved oxygen 68 is driven from the fuel 25 on a continual basis. The dissolved oxygen is then exhausted overboard or to other systems that may utilize it. Although an example of a permeable membrane is illustrated, it should be understood that it is within the contemplation of this invention that other known mechanisms that remove oxygen from fuel or other methods enabling liquid fuel being vaporized without appreciable coking are within the contemplation of this invention.

Referring to Figure 3, liquid fuel from the deoxygenator 20 flows into the heat transfer device 22 and is vaporized as indicated at 32. Because the fuel is now substantially void of dissolved oxygen, heating or vaporization of the fuel does not result in the formation of undesirable amounts of insoluble materials. The now vaporized fuel is mixed with an oxidizer to aid reforming as is indicated at 36. The reform products will typically include H2, CO, H2O and CO2. Other oxidizers, elements and compounds for aiding the combustion process may also be combined with the vaporized fuel and are within the contemplation of this invention.

The vaporized fuel is then reformed within the catalytic reactor 24 as indicated at 36. The catalytic reactor 24 includes materials that cause favorable reactions within the fuel in preparation for combustion. Reform products emitted from the catalytic reactor 24 can then be mixed with additional oxidizer as indicated at 38. The mixed fuel and oxidizer is then injected into the combustor 18 for combustion as is indicated at 40.

The present invention in its preferred embodiments allows combustion to occur at a moderately low temperature, for example between 2000°F and 3000°F (1093°-1649°C).

Although a preferred embodiment of this invention has been disclosed, a worker of ordinary skill in this art would recognize that certain modifications would come within the scope of this invention. For that reason, the following claims should be studied to determine the true scope and content of this invention.

## Claims

1. A method of operating a fuel transformation system (26) for preparing liquid fuel for a combustion device (18) comprising the steps of:
a) removing dissolved oxygen from a liquid fuel at a first temperature with a deoxygenation device (20);
b) heating the liquid fuel to a second temperature greater that the first temperature to vaporize at least a portion of the fuel;
c) mixing the vaporized fuel with an oxidizer; and
d) reforming the vaporized fuel oxidizer mixture in a catalytic reactor (24).

2. The method as recited in claim 1, including the step of mixing additional oxidizer after the vaporized fuel has reformed in the catalytic reactor (24).

3. The method as recited in claim 1 or 2, wherein said step a) comprises flowing liquid fuel adjacent an oxygen permeable membrane (60), and generating an oxygen partial pressure differential across said permeable membrane (60) for drawing dissolved oxygen from the liquid fuel.

4. The method as recited in any preceding claim, wherein said first temperature is below a temperature that generates appreciable insoluble material produced by interactions between the fuel and the dissolved oxygen.

5. The method as recited in any preceding claim, wherein said second temperature is above a temperature that generates appreciable insoluble material produced by interactions between the fuel and the dissolved oxygen.

6. The method as recited in any preceding claim, including the step of burning the vaporized fuel oxidizer mixture within a combustor (18) at a moderately low temperature.

7. The method as recited in claim 6, wherein said moderately low temperature comprises a temperature between 2000 and 3000 degrees F (1093°C and 1649°C).

8. The method as recited in any preceding claim, including bypassing a portion of liquid fuel around the fuel transforming system (26), and another portion of the liquid fuel through the fuel transforming system (26).

9. The method as recited in claim 8, wherein a or the portion of liquid fuel bypassed around the fuel transforming system (26) is received directly into the combustion device (18).

10. The method as recited in claim 8 or 9, wherein a or the portion of liquid fuel bypassed around the fuel transforming system (26) is received directly into a post-mixing device (28).

11. A system for conditioning liquid fuel for a combustion device (18), said system comprising:
at least one fuel deoxygenator (20) for removing dissolved oxygen from a liquid fuel;
a heating device (22) for vaporizing at least a portion of the liquid fuel;
a mixing device (29) for adding oxidizer to vaporized fuel; and
a catalytic reactor (24) for reforming fuel after mixing with the oxidizer.

12. The system as recited in claim 11, including a second mixing device (28) for adding additional oxidizer after being reformed within said catalytic reactor (24).

13. The system as recited in claim 11 or 12, wherein said fuel deoxygenator (20) receives liquid fuel at a first temperature below a temperature that generates the formation of undesirable insoluble materials.

14. The system as recited in claim 13, wherein said heating device (22) heats the fuel to a second temperature greater than said first temperature.

15. The system as recited in any of claims 11 to 13, wherein said liquid fuel flows through said deoxygenator (20) and adjacent an oxygen permeable membrane (60).

16. The system as recited in claim 15, including an oxygen pressure differential across said oxygen permeable membrane (60) for drawing dissolved oxygen from fuel flowing adjacent said permeable membrane (60).

17. The system as recited in any of claims I 1 to 16, wherein said combustion device (18) comprises a combustor for a gas turbine engine.

18. The system as recited in any of claims 11 to 17, including a bypass (27) for routing a portion of fuel around at least one of the fuel deoxygenator (20), the heating device (22), the mixing device (29) and the catalytic reactor (24).
